# EUROPEAN PATENT SPECIFICATION

(11) **EP 0 279 555 B1**
(45) Date of publication and mention of the grant of the patent: **04.05.1994**
(21) Application number: 88300872.4
(22) Date of filing: 02.02.1988
(51) Int. Cl.: G06K 11/06, G06F 3/023

(54) **Computer data entry system**
Dateneingabesystem für einen Rechner
Système pour l'entrée de données dans un ordinateur

(30) Priority: 18.02.1987 US 16018
(43) Date of publication of application: 24.08.1988
(73) Proprietor: Retter, Dale J., Scottsdale Arizona 85258 (US)
(72) Inventor: Retter, Dale J., Scottsdale Arizona 85258 (US)
(74) Representative: Smith, Norman Ian

(56) References cited:
- US-A- 4 580 006
- US-A- 4 580 006
- IBM TECHNICAL DISCLOSURE BULLETIN, vol. 27, no. 10B, March 1985, pages 6299-6305, New York, US; "Mouse/keyboard concept incorporating unique devices for controlling CRT display cursors"
- IDEM

## Description

This invention relates to computer data entry systems.

This application is related to co-pending application No. 88300858.3 (EP-A-0279553).

### Background

The transmission of alpha-numeric information from one person to another currently essentially is carried out by means of four different data entry techniques. These include sticks (chisel on stone, pencils, pens, markers, and the like), keyboards (typically used with typewriters, computers, and word processors), spatial devices (computer "mice", track balls, joy sticks, and the like used with computers); and voice (direct human communication and voice responsive computer systems). At the present state of technology, word processors and computers primarily rely upon data entry keyboards and the various spatial devices for inputting information into the computer, electronic typewriter, or word processor for subsequent display and/or printing. Of these techniques, keyboards are the most widely used today and many computers use a combination of keyboards and spatial devices (such as the movable "mice" which have become highly popular since 1980 for example on the Apple McIntosh Computer).

The now standard keyboard character assignment used in conjunction with typewriters and computers has what is know as the "QWERTY" key arrangement. This designation is named after the top row of letters in the four row keyboard. The "QUERTY" arrangement was invented and patented over 100 years ago and resulted from some unique characteristics of the all mechanical typewriters which existed at the time of the invention. One problem with early mechanical typewriters was that the entire force for providing the mechanical energy used to operate most of the typing function was provided by the force with which the key was struck. In addition to moving the typebar, this force also released the carriage and moved the ribbon forward with no other energy source.

Early keyboards utilized a simple alphabetic layout, but it was quickly discovered that the typebars of the early, crude, mechanical typewriters frequently jammed once a typist learned how to use the keyboard. After substantial experimentation, the "QWERTY" keyboard was developed to place the most commonly used letters in English at the opposite sides of the type basket. The keyboard itself was laid out to provide direct mechanical connections to the various letters. Consequently, many of the commonly used letters were placed away from the "home" (center) row where the fingers normally rested. In addition, the "QWERTY" keyboard was designed with another slow-down technique by causing common letter pairs to be struck by the same finger on the same hand. This is the slowest motion for successive letters which could be developed. The "QWERTY" keyboard also introduced two function keys the "CAP LOCK" and "SHIFT" key which allowed upper and lower case letters to be activated by the same key and allowed the upper row of keys (the numbers and punctuations) to share the same keys. This was in contrast to typewriters less advanced that "QWERTY" which had eight rows of keys instead of the basic four rows for "QWERTY". The early widespread popularity of the "QWERTY" mechanical typewriter resulted in a nearly universal adoption of the "QWERTY" keyboard layout.

The "QWERTY" keyboard continued to be used, because of widespread mastery by secretaries and data input operators, even after the reasons for its original development no longer were applicable. Electric typewriters eased the finter burden by allowing the keystroke to mechanically access an electric motor which then provided the energy to complete the mechanical process of printing and operating the other mechanism of the typewriter. Electric typewriters in turn have been replaced by electronic typewriters, word processors, and computers which completely eliminate the necessity for the inefficient "QWERTY" keyboard layout. This layout, however, has continued to dominate the market today, long after its need has disappeared. Computer keyboard buffers, which separate too quickly struck keys, eliminate all of the problems which the "QWERTY" keyboard originally was designed to overcome.

Efforts have been made to modify the layout of multi-key keyboards to improve efficiency. One such keyboard is disclosed in the keyboard to Dvorak #2,040,248. This keyboard was designed after an analysis of errors made with the standard "QWERTY" layout. The Dvorak layout concentrates the vowels and most frequently used letters on the "home" row so that there is much less moving around from row to row of the fingers of the typist. It has been found that this row to row movement in "QWERTY" keyboards and other multiple row keyboards results in most of the errors made by typist. In addition, the Dvorak keyboard changes the balance between the left and right hand. In a "QWERTY" keyboard the usage is 57% for the left hand, whereas in Dvorak the change is to 56% for the right hand better suited for right handed typist. Even though the Dvorak keyboard, however, has been known for over 50 years, it has not made many in-roads into the standard "QWERTY" keyboard world. Even with its greater efficiency, however, Dvorak keyboards still are subject to the requirement of movement over four rows of keys (when a number row is provided). This is inefficient and inherently presents a capacity for introduction of errors when the fingers move with little or no tactile feedback from one row to another away from the "home" row.

Other efforts at providing a more natural arrangement of keys to fit the natural shape of the hand and to utilize the significantly greater dexterity of the thumbs is typified in the keyboard arrangement of Malt #4,244,659. With ordinary keyboards such as the "QWERTY" and Dvorak keyboards, the eight fingers are used to produce all of the key strokes and the thumbs (primarily the right thumb) are used solely to operate the space bar. The thumb of the human hand, however, has more capability of finger movement than the index finger and is the most important and most-used digit of the hand. Malt recognized this and assigned each thumb six different keys or functions. In addition, the keys are laid out in a curved arrangement corresponding to the different lengths of the fingers on each hand. The keys for each hand also are separated into two grouops with the thumb positions adjacent one another. Even though it appears to be a more efficient layout than a standard "QWERTY" keyboard, the Malt keyboard arrangement has not been widely adopted. Once again, the fingers (and the thumbs) must move over multiple rows of keys; so that row to row and key to key movement errors still may be introduced with the Malt keyboard.

Other types of non-standard keyboard character assignments have been developed over the years in addition to the Dvorak and Malt keyboards discussed above, but in view of the minimal advantages obtained from such assignments over the standard "QWERTY" arrangement, no overriding reason has been presented to the industry to modify the well-established and well-known "QWERTY" keyboard arrangement.

An entirely different aproach has been undertaken by others in the past to provide multiple switches or key assignments at eachy of several different fixed finger locations. Such an approach is disclosed in the patent to Hesh #2,536,228. This patent is for electrically operated typewriter in which the keyboard location of the typewriter has been modified to provide two groups of five semi-circular keys. These keys underlie the thumb and forefingers, respectively, of the left and right hands. Each key may be operated by pivoting it forward, backward, left, right or by pushing it straight down to obtain five different outputs from each key position. These outputs then are used to operate the otherwise conventional mechanism of the electric typewriter. Similar arrangements are shown in the patents to Samuel #3,633,724 (for a typewriter) and Wuenn #3,965,315 (for a calculator). The Samuel typewriter employs only eight pivoted keys and utilizes the conventional space bar, return, and shift keys normally associated with standard typewriter keyboards.

The systems of Hesh, Samuel, and Wuenn, since they are placed on flat keyboard-like surfaces, do not provide support for the hands and fingers of the operator even though the layout of Hesh does place the keys in a semi-circular arrangement conforming to the relaxed position of the fingertips and thumb of each hand. It is very difficult for a keyboard operator to maintain the hands and fingers in a closely confined space unless supporting and stabilizing structure is provided.

A variation of the multiple switch location for each finger is disclosed in the keyboard of the Runge #4,265,557. The system of this patent provides clusters of keys operated by each finger. The keys of the cluster are closely associated around the finger in its "home" row position. One key rests above the operator's finger and is operated by raising the finger. There also are keys behind and in front of the conventional "home" row key, so that each finger is capable of operating four different keys or switches from the "home" row position. The Runge device "locks" the fingers into narrowly defined locations without providing physical support or tactile feedback for tha hands and arms to maintain the precise locations required. As a practical matter, this makes maintaining the fingers and hands in the precise locations extremely difficult and fatiguing for more than brief time periods. Runge does not take advantage of the capabilities of the thumb, however, which simply is left to operate a conventional spare bar. The Runge device is a relatively complex set of mechanical lever arms subject to misadjustment and wear.

A conceptual illustration of a semi-captive keyboard employing multiple key operation from each of the fixed finger positions is shown in the "Xerox Disclosure Journal", Volume 1, No. 2, February 1986 (Page 85). No details of the keyboard are shown, but it essentially comprises a generally flat plate on which the hand is placed palm down with the fingers and thumb extended. The fingers and thumb appear to enter into openings in a vertical, raised portion adjacent the flat palm receiving portion. In these openings, clusters of keys are placed around the fingers for operation by each finger. This disclosure lacks sufficient details for implementation into an operative system.

The disadvantages of the above identified prior art keyboards are substantially overcome with the "ALPHA-NUMERIC KEYBOARD" of applicant's above identified co-pending application. That keyboard causes the thumbs to be extensively used and the fingers always to be in a "home" position. In addition, the keyboard is divided into two separate sections which underlie the palm of each hand and which may be spaced in any relative location for the comfort and convenience of the operator.

Spatial data entry devices also are becoming extensively used, generally as a supplement or auxiliary device in conjunction with a keyboard. Such spatial data entry devices typically are in the form of "mice", trackballs, joy sticks, and tablets. Every one of these devices requires the hands of the computer operator to leave the keyboard to operate the device.

Tablets are essentially electronic "sticks". They generally are comfined to artistic free-hand use and some graphics. Tablets generally are quite poor in use for most other applications since they require a major interruption of keyboard use and because they tend to input absolute rather than relative spatial information.

Joy sticks generally are in one or two forms. The first comprises a vertical lever which may be moved in any direction in a 360 circle about the base of the lever to convert angular rotation to linear movement. The second fractionates the motion into non-quantified directional vectors, such as up, down, left and right. These devices at the present time are generally confined to computer games and are not currently sufficiently precise for precision work. As mentioned previously, like tablets, joy sticks require the hand to leave the keyboard if they are used in conjunction with a keyboard for entering alpha-numeric data.

The most commonly used spatial devices are mice and trackballs. Both of these devices permit the hand to input spatial information and to manipulate visual displays on the cathode ray tube (CRT) employed with most computer display. Mice are the primary spatial input devices used for serious computer and word processor use. Since 1980, mice have been included in the majority of the successful new micro-computer systems. Substantial software utilizing mice has been developed and this is currently one of the fastest growing areas of software development.

Mice are generally in the form of a small box, usually placed off to the right side or the left side of an otherwise standard computer keyboard. The box rests on the surface of a desk or a table; and when the mouse input is desired, the box movement over the table in various directions is translated into comparable two-dimensional movement on the CRT screen. Mice generally are used to manipulate things on the screen, such as moving cursor or insertion point markers (as used for editing and controlling text and numeric data entry and selecting "cells" within spread sheet programs), operating pull-down menus and windows, manipulating on screen text and drawings, and generating graphics. The use of a mouse with presently known computers, however, requires the hand to leave the keyboard to operate the mouse. This is disruptive of the continuous and rapid flow of information between keyboard, mouse, and computer.

Trackballs are essentially "upside down" mice. The major advantage over mice is that the location remains constant and close to the keyboard which allows easier alternation between the keyboard and the trackball. Trackballs require less desk space then most mice. The major disadvantage of a trackball, however, is that it is less controllable than a mouse and it is somewhat less intuitive in use. Like mice, however, trackballs require the hand to leave the keyboard.

All of the presently known spatial data entry devices which are operated by the hand require the hand to leave the keyboard for operation of the spatial device. To overcome this problem, a device has been developed which consists of a headband containing an ultrasonic receiver for detecting head movement. These receivers convert the movement to mouse-type movement signals to manipulate icons on the computer screen. The device is somewhat awkward to use, but one very important advantage of this device is that it permits simultaneous use of the keyboard and the headband device without removing the hands from the keyboard. The headband, however, is cumbersome; and when it is being used, it requires significant restraints on the head movements of the operator.

A combination mouse/keyboard concept which permits use of the mouse without requiring the removal of hands from the keyboard is shown in IBM Technical Dicslosure Bulletin, Vol. 27, No. 10B, March 1985. This disclosure teaches an integrated keyboard/mouse device, in which a standard keyboard has a mouse constructed beneath it. Operation of the mouse is effected by downward pressure of the palms of the hands on a lever extending along the leer edge of the keyboard. Because the keyboard is a standard keyboard, however, simultaneous operation of the data keys and the mouse is not feasible.

It is desirable to provide an improved data device which combines a finger actuated keyboard and a mouse in a single, easy to use unit which overcomes the disadvantages of the prior art and which is particularly suitable for utilisation as a computer input keyboard.

It is an object of this invention to provide an improved computer data entry system.

According to the present invention there is provided a computer data input control system having a first housing having an upper surface with data input keys on it for operation by the fingers of an operator, at least a first mouse device mounted within the housing and including a movement detector extending from the lower surface, the housing being movable by the hand of the operator to operate the movement detector of the mouse device as the housing is moved on a support surface, said system being characterised by:
the housing having a graspable raised substantially convex, central portion adapted to underlie and support the palm of at least one hand of an operator in a natural relaxed concave position, with the fingers freely dangling so that the fingertips of each finger extend substantially vertically downwardly; a plurality of data input keys arranged adjacent the raised central portion in groups of predetermined three dimensional patterns at each of the thumb and fingertip positions of the hand of such operator on the upper surface of the housing, each group being operable by different fingertips of an operator from a constant home position, wherein each finger is capable of activating all of the keys of the associated group through finger movement alone, the finger positions comprising individual fingertip wells, each having a bottom and generally vertical sides with discrete key surfaces thereon for freely receiving the fingertips of an operator to permit multiple direction movement of the fingertips to contact different discrete ones of the key surfaces corresponding to the direction of movement of the fingertips, and wherein the data input keys are located in various positions in the wells so that the data input keys may be operated by the fingertips in the constant home position;
the or each first mouse device having an operating switch,
a first control member on the housing at the thumb position and coupled with the operating switch of the mouse device to operate the switch when the control member is depressed by the thumb of the operator, and the entire first housing being movable by the hand of the operator without removal of the fingertips from the constant home position to operate the movement detector of the mouse device as the housing is moved on a support surface; and
means for coupling the mouse device and the data input keys with a processing device.

In accordance with a preferred embodiment of this invention, a computer data input system comprises a housing member which is adapted to underlie the palm of a hand of an operator. The housing member has data input keys on the upper surface for operation by the fingers of the operator. A mouse is mounted within the housing member and has an input on the lower surface of the housing member. The entire housing member is movable by the hand of the operator to operate the input of the mouse as the housing member is moved about on a surface, without removing the fingers from the positions adjacent the input keys on the upper surface.

The invention will be described now by way of example only, with particular reference to the accompanying drawings. In the drawings:
Figure 1 is a perspective view of a preferred embodiment of the invention;
Figure 2 is an enlarged top perspective view of a portion of the embodiment shown in Figure 1;
Figure 3 is a bottom perspective view of the device shown in Figure 2;
Figure 4 is an exploded view of the device shown in Figure 3;
Figure 5 illustrates details of a portion of the device shown in Figures 2 through 4; and
Figures 6 and 7 are partially cut-away views illustrating additional operating characteristics of the device of Figures 2 through 5.

### Detailed Description

Reference now should be made to the drawing in which the same reference numbers are used throughout the different figures to designate the same components.

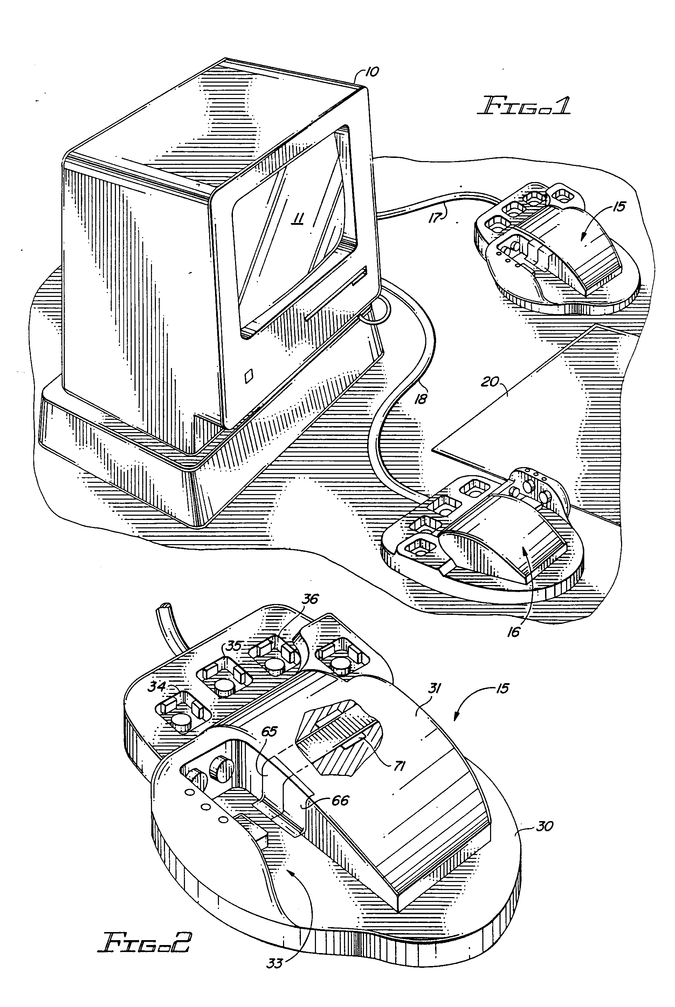

Figure 1 shows a computer system employing a preferred embodiment of the invention. A typical computer 10, which has a cathode ray tube (CRT) display screen 11 is illustrated. In place of a conventional keyboard and/or mouse, however, a pair of separate hand-sized right and left data entry devices 15 and 16 are provided. These devices provide separate thumb and finger positions in the form of receiving wells for the thumbs and fingers of each hand on the respective devices 15 and 16. Within these wells, alpha-numeric data entry keys are clustered; so that each finger and thumb is capable of operating a number of different keys from a single "home" position. For the fingers, five keys are provided at each position; and for the thumbs, up to seven keys are provided. The structure and function of this data entry device, so far as the keyboard operation is concerned is described in substantial detail in applicant's above-mentioned co-pending application. For that reason the specific key assignments and the like is not discussed here.

As is readily apparent from Figure 1, the use of two separate devices 15 and 16 for the two hands of the operator permits text materials such as the paper 20 to be placed in a most natural position in front of the operator between the hands which are placed on the devices 15 and 16. Input cables 17 and 18 interconnect the computer 10 with the devices 15 and 16 in the manner of connection of a conventional keyboard or other data entry device. Also as illustrated in Figure 1, the data entry devices 15 and 16 are relatively small (only somewhat larger than the palm of a hand) and do not need to be placed in line with one another, if different positions are more comfortable or more convenient for a particular operator.

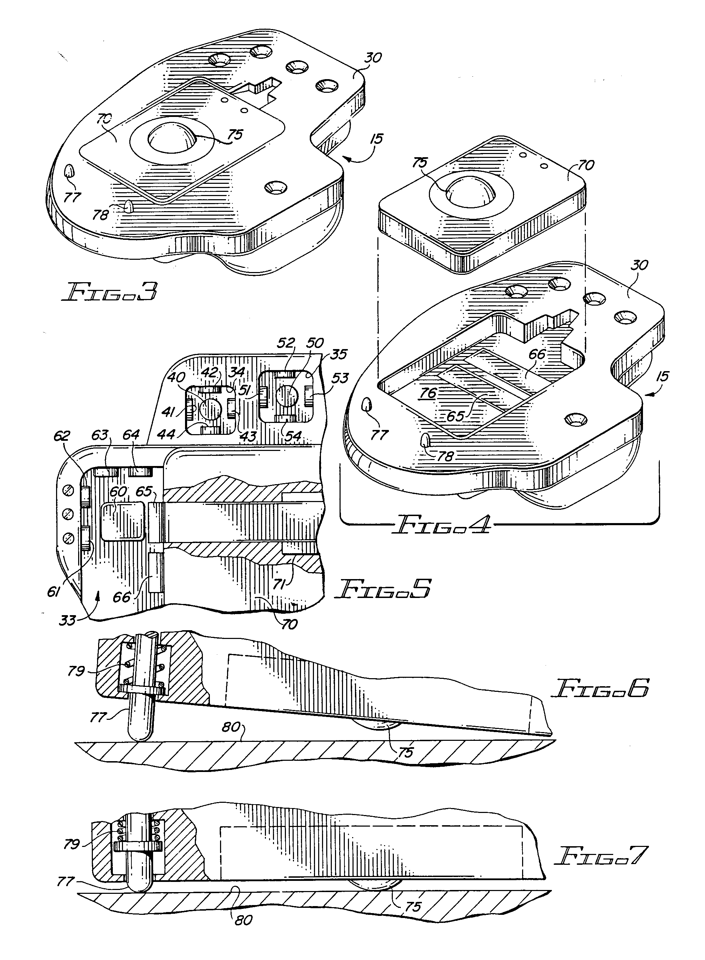

As shown more clearly in Figure 2, which is an enlarged detail of the device 15 (the device 16 is a mirror image of this one and for that reason is not shown), the data entry device comprises a platform 30 which rests on a desk or table top. On this platform 30 is a raised central portion 31 which supports the palm of the hand of the operator, with the thumb extending into the recess 33 and the index, middle, ring, and little fingers extending into wells 34, 35, 36, and 37, respectively. The location of the recess 33 and the wells 34, 35, 36, and 37, is selected to permit the thumb and fingers of the operator to extend in a normal curved, relaxed, comfortable position.

This is in dramatic contrast to a conventional keyboard which requires the fingers to unnaturally and uncomfortably conform to a nearly flat plane while they stretch and curl. The unnatural motion and position caused by operation of conventional keyboards produces finger fatigue in almost all persons who operate such a keyboard for extended periods of time. In addition, with a standard or conventional keyboard, the operator has to support the entire weight of the hands and forearms poised just above the keyboard. This is a stressful and uncomfortable position to maintain. In a relatively short time this position generates significant discomfort in an inexperienced keyboard operator and even experienced operators find the position uncomfortable after prolonged typing.

With a data entry system utilizing input devices 15 and 16 as shown, the operator can rest the palms of the hands on the raised portion 31 (and a similar portion on the device 16) over a large area, with the finger and thumb extending downwardly curled from this area. This provides needed support for the weight of the hands and forearms and stabilizes the hands and fingers in a relaxed comfortable position within millimeters of each and every key.

In addition to providing the improved keyboard data entry capability described above and described in greater detail in the above mentioned co-pending application, one or both of the devices 15 and 16 also incorporates as an integral part, a computer "mouse" of the type widely used today. This is shown more clearly in Figures 3 and 4. These figures illustrate the underside of the right hand device 15 to show a well 76 formed beneath the raised portion 31. A computer mouse 70, having an operating "click" or "on/off" button 71 on it and with a surface engaging data input senser 75 on its bottom, is inserted into the well 76.

The mouse 70 may be a conventional mouse such as used with many popular computers today, and the well 76 simply needs to be conformed to accommodate the outer shape of such a conventional mouse. The mouse may be inserted into the well 76 without any alteration whatsoever. On the other hand the mouse 70 also may be built into the device 15 (or 16) as an integral part. For original equipment computers, this latter approach most likely will be implemented. Whether the mouse is an integral part of the device 15 or is "swallowed- up" in the device as illustrated in Figures 3 and 4, the output cable from the mouse either may be separately connected to the computer 10 or incorporated into the cable 17 illustrated in Figure 1.

Figure 5 illustrates in detail the upper left portion of the device 15 shown in Figure 2. The thumb slot 33 and the finger wells 34 and 35 are shown, with an illustration of the five switches 40 through 44 which are engaged by the index finger in the well 34 and the five switches 50 through 54 which are engaged by the middle finger when it is inserted into the well 35. Similarly, the thumb switches 60 through 66 which are disclosed in the bottom and on the three closed sides of the thumb cavity 33 are shown. The manner in which these switches are operated, and the particular functions which are assigned to those switches is described in detail in applicant's co-pending application. For the purposes here, it is sufficient to note that the thumb and fingers always remain in a "home" position within the respective openings or wells and maybe moved downwardly, or forward, back, left, or right to operate the respective switch which produces the desired indicia or function for operation of the computer 10.

In addition, however, the right thumb may be squeezed downwardly and inwardly toward the raised central portion 31 of the device 15 to depress a pushbutton lever or actuator 65 or 66. These pushbutton lever are shown most clearly in Figures 2 and 5. The pushbutton lever 65 has an extension (see Figure 2) which overlies and rests on the normal "click" or "on/off" button 71 on the top of the mouse 70. Thus, depression of the pushbutton 65 against the normal upward spring bias of the button 71 causes operation of the mouse button 71 in its normal manner. As a result, any time the mouse button input is desired, the operator simply squeezes the right thumb downwardly and inwardly against the pushbutton lever 65 to operate the button 71 on the mouse to obtain the desired conventional results. A similar pushbutton lever 66 may be employed for mouse devices which have two input buttons. The operation of the button 66 is the same as the operation of the button 65 and accomplishes the desired result for such two input devices.

It is readily apparent that since the device 15 may be moved about by the hand at any time, the mouse 70 may be operated without ever requiring the hand to be moved from the device. This means that the hand is always on the device and is always able to execute the mouse function without ever moving the fingers and thumb away from their constant "home" key positions. Since the mouse 70 is built inot the device 15, the mouse is always available and ready for more frequent use than in conventional systems which require the operator to remove the hand completely from the keyboard in order to operate the mouse.

By incorporating the mouse 70 into the device 15, it also is possible for software designers to develop programs which are capable of employing simultaneous key and mouse operations and significant enhancement of the operating capabilities of programs will result.

It may be desirable from time-to-time to move the device 15 without engaging the mouse input sensor 75 on the surface of the table or desk on which the device 15 is placed. To permit this, a pair of spring-loaded skids 77 and 78 are provided to raise the device slightly by the action of compression springs 79; so that the mouse actuating member 75 does not touch the top of the table 80, or so that the motion detection device is inactivated. This is illustrated in Figure 6. By means of a slight downward pressure on the palm of the hand, however, the spring 79 may be compressed to cause the engaging member 75 or the activation of a motion detection apparatus of the mouse to engage the table surface 80 as shown in Figure 7. The mouse then may be operated in its conventional manner. Such operation, however, is accomplished by movement of the entire device 15 which is only slightly larger than a standard mouse to effect the desired operating result.

By permitting the device to swallow or incorporate already existing mice, the data entry devices 15 and 16 readily may be used with already existing computers having a mouse as a feature. No alteration whatsoever is required for incorporating a standard mouse 70 into either of the devices 15 and 16. In addition, it is readily apparent that the possibility of providing a mouse under each device 15 and 16 is present, thereby significantly expanding potential uses for "mice" with computers of the future.

Various changes and modifications will occur to those skilled in the art without departing from the true scope of the invention. For example, the representation of the mouse which is used is simply for purposes of illustration and is not to be considered to be as limiting. Furthermore, the particular shape and configuration of the input devices 15 and 16 may be altered without departing from the true and intended scope of the invention as defined by the appended claims.

## Claims

1. A computer data input control system having a first housing (15 or 16) having an upper surface (31) with data input keys (40 to 54) on it for operation by the fingers of an operator, at least a first mouse device (70) mounted within the housing and including a movement detector (75) extending from the lower surface, the housing (15 or 16) being movable by the hand of the operator to operate the movement detector (75) of the mouse device (70) as the housing is moved on a support surface (80), said system being characterised by:
the housing (15 or 16) having a graspable raised substantially convex, central portion (31) adapted to underlie and support the palm of at least one hand of an operator in a natural relaxed concave position, with the fingers freely dangling so that the fingertips of each finger extend substantially vertically downwardly; a plurality of data input keys (40 to 66) arranged adjacent the raised central portion (31) in groups of predetermined three dimensional patterns at each of the thumb (33) and fingertip positions (34 to 37) of the hand of such operator on the upper surface of the housing (15), each group being operable by different fingertips of an operator from a constant home position, wherein each finger is capable of activating all of the keys of the associated group through finger movement alone, the finger positions comprising individual fingertip wells (34 to 37), each having a bottom and generally vertical sides with discrete key surfaces (such as 40 to 54) thereon for freely receiving the fingertips of an operator to permit multiple direction movement of the fingertips to contact different discrete ones of the key surfaces corresponding to the direction of movement of the fingertips, and wherein the data input keys (such as 40 to 54) are located in various positions in the wells (34 to 37) so that the data input keys may be operated by the fingertips in the constant home position;
the or each first mouse device (70) having an operating switch (71),
a first control member (65) on the housing (15) at the thumb position (33) and coupled with the operating switch (71) of the mouse device (70) to operate the switch (71) when the control member (65) is depressed by the thumb of the operator, and the entire first housing (15) being movable by the hand of the operator without removal of the fingertips from the constant home position to operate the movement detector (75) of the mouse device (70) as the housing (15) is moved on a support surface; and
means (18) for coupling the mouse device and the data input keys with a processing device (10).

2. The system according to claim 1 further characterised by a device (77) to disable the movement detector (75) when operation of the mouse device (70) is not desired.

3. The system according to Claim 2 further characterized in that the movement detector comprises a surface engaging device (75) and the disable device (77) includes a spring (79) to lift the surface engaging device (75) out of engagement with a surface underlying the housing (15) until the force of the spring (79) is overcome by a downward pressure through the palm of the hand of the operator on the housing (15).

4. The system according to Claim 3 further characterized in that the housing (15) underlies the palm of only one hand of an operator.

5. The system according to Claim 1 further characterized in that the mouse device (70) is removably mounted in a cavity (76) in the lower surface of the housing (15).

6. The system according to Claim 5 further characterized in that the control member (65) on the housing (15) is located at the thumb position and comprises a push button switch actuator (65) for engagement by the thumb; and the mouse device (70) has a push button switch (71) thereon operated by the push button switch actuator (65).

7. The system according to Claim 1 further characterized in that the first housing (15) is graspable and is adapted to underlie and support the palm of only one hand of an operator; and further characterized by a second physically separate second housing (16) having a graspable raised, substantially convex, central portion adapted to underlie and support the palm of the other hand of an operator in a natural relaxed concave position, with the fingers freely dangling so that the fingertips of each finger extend substantially vertically downwardly, the second housing (16) having a plurality of data input keys (comparable to the keys (40 to 64) thereon physically arranged in a mirror image of the groups of keys (such as 40 to 64) on the first housing (15) for operation by the fingertips of the other hand of an operator from a constant home position, the second housing (16) including a second mouse device (70) mounted within the second housing (16) and having a movement detector (75) extending from the lower surface of the second housing (16) for contacting a support surface (80); a second control member (65) on the second housing (16) operates a switch (71) of the second mouse device, and the second housing (16) is moved by a hand of such operator without removal of the fingertips from the constant home position to operate the movement detector (75) of the second mouse device (70) as the second housing (16) is moved independently of the first housing (15) on a support surface; and the data input keys (40 to 64 and others) are divided between the first and second housings (15 and 16); and the means (18) coupling the mouse device couples both the first and second mouse devices (70) and the data input keys on both of the first and second housing members (15 and 16) with the processing device (10).

8. The system according to Claim 7 further characterized in that the first and second mouse devices (70) function to provide vernier mouse control, with the first mouse device (70) supplying rapid mouse movement signals and the second mouse device (70) providing slower mouse movement signals.

9. The system according to Claim 8 further characterized in that the signals from the first and second mouse devices (70) are integrated into a single composite mouse control signal (via 18).

10. The system according to Claim 7 further characterized in that the signals produced by the first and second mouse devices (70) are mutually independent signals such that the signal generated by the first mouse device (70) may be differentiated from the signal generated by the second mouse device (70).

11. The system according to Claim 7 further characterized in that the second control member (65) on the second housing (16) is located at the thumb position and comprises a push button switch actuator (65) for engagement by the thumb; and the second mouse device (70) and is mounted within thej second housing (16) and has a push button switch (71) operated by the push button switch actuator (65).

12. The system according to Claim 7 further characterized in that the second mouse device (70) is removably mounted in a cavity in the lower surface of the second housing (16).

13. The system according to Claim 7 further characterized by a device (77) to disable the movement detector (75) when operation of the second mouse device (70) is not desired.

14. The system according to Claim 13 further characterized in that the movement detector (75) comprises a surface engaging device (75) and the disable device (77) includes a spring (79) to lift the surface engaging device (75) out of engagement with a surface underlying the second housing (16) until the force of the spring (79) is overcome by a downward pressure through the palm of the hand of the operator on the second housing (16).

## Patentansprüche

1. Ein die Dateneingabe in einen Rechner steuerndes System mit einem ersten Gehäuse (15 oder 16) mit durch die Finger einer Bedienungsperson zu betätigenden Dateneingabetasten (40-54) auf seiner Oberseite, zumindest einer ersten Maus (70) innerhalb des Gehäuses und einem über die Gehäuseunterseite vorstehenden Bewegungsfühler (75), wobei das Gehäuse (15 oder 16) mittels einer Hand der Bedienungsperson auf einer Bezugsfläche verschiebbar ist, um den Bewegungsfühler (75) der Maus (70) zu aktivieren und wobei das System wie folgt gekennzeichnet ist:
das Gehäuse (15 oder 16) weist einen übergreifbaren rückenförmigen, im wesentlichen konvexen Zentralteil (31) auf, der unter eine Hand der Bedienungsperson zu liegen kommt und dabei die Hand im Handballenbereich stützt, wenn diese Hand eine natürlich entspannte konkave Haltung einnimmt und dabei die Finger frei nach unten hängen, so daß die Fingerspitzen im wesentlichen vertikal nach unten zeigen;
eine Mehrzahl von Dateneingabetasten (40 bis 66) ist auf der Oberseite des Gehäuses (15) nahe dem rückenförmigen Zentralteil (31) gruppenweise in vorbestimmten dreidimensionalen Mustern im Daumen-und jedem Fingerbereich der Hand der Bedienungsperson angeordnet, wobei jede Tastengruppe von jeweils einer der Fingerspitzen der Bedienungsperson aus einer konstant beizubehaltenden Ausgangsposition der Hand heraus bedienbar ist, so daß jeder Finger in der Lage ist, alle Tasten der dem jeweiligen Finger zugeordneten Tastengruppe allein durch Fingerbewegung zu aktivieren, wobei weiter jeder Fingerbereich durch einen Fingerspitzenaufnahmeschacht (34 bis 37) markiert ist und jeder Fingerspitzenaufnahmeschacht einen Boden und im wesentlichen vertikal gerichtete Seitenwände mit diskreten Tastenflächen (wie 40 bis 54) aufweist, um jede Fingerspitze der Bedienungsperson in einen der Fingerspitzenaufnahmeschächte frei einführen zu können und durch Bewegung der jeweiligen Fingerspitze im jeweiligen Aufnahmeschacht in mehreren Richtungen, abhängig von der jeweiligen Bewegungsrichtung, eine der mehreren diskreten Tastenflächen dieses Aufnahmeschachts berühren zu können, wobei die Dateneingabetasten (wie 40 bis 54) in unterschiedlichen Bereichen der Fingerspitzenaufnahmeschächte (34 bis 37) angeordnet sind, so daß die Dateneingabetasten mittels der Fingerspitzen in der konstanten Ausgangsposition der Hand zu betätigen sind;
die oder jede Maus (70) ist mit einer Betätigungstaste (71) versehen;
ein erstes Steuerglied (65) auf dem Gehäuse (15) im Daumenbereich (33) ist mit der Betätigungstaste (71) der Maus (70) gekoppelt, um diese Betätigungstaste (71) zu aktivieren, wenn das Steuerglied (65) vom Daumen der Bedienungsperson nach unten gedrückt wird, und das erste Gehäuse (15) ist in seiner Gesamtheit mittels der Hand der Bedienungsperson zu verschieben, ohne daß die Fingerspitzen ihre konstante Ausgangsposition verändern müßten, um den Bewegungsfühler (75) der Maus (70) zu aktivieren, während das Gehäuse (15) relativ zur Bezugsfläche verschoben wird; und schließlich
ist ein Mittel (18) vorgesehen, das die Maus und die Dateneingabetasten mit einem Prozeßrechner (10) koppelt.

2. Das System gemäß Anspruch 1 in der weiteren Kennzeichnung durch eine Vorrichtung (77) zum Sperren des Bewegungsfühlers (75), wenn ein Arbeiten der Maus (70) nicht gewollt ist.

3. Das System gemäß Anspruch 2 in der weiteren Kennzeichnung, daß der Bewegungsfühler eine mit der Bezugsfläche zusammenwirkende Vorrichtung (75) und die Sperrvorrichtung (77) eine Feder (79) einschließt, um die mit der Bezugsfläche zusammenwirkende Vorrichtung (75) am Zusammenwirken mit der Bezugsfläche zu hindern, bis die Kraft der Feder (79) durch den nach unten gerichteten, vom Handballen der Bedienungsperson ausgehenden und auf das Gehäuse (15) wirkenden Druck überwunden wird.

4. Das System gemäß Anspruch 3, weiter gekennzeichnet dadurch, daß das Gehäuse (15) sich unter dem Ballen nur einer Hand einer Bedienungsperson befindet.

5. Das System gemäß Anspruch 1, weiter gekennzeichnet dadurch, daß die Maus (70) in eine Kammer der Unterseite des Gehäuses (15) hinein verbringbar ist.

6. Das System gemäß Anspruch 5, gekennzeichnet weiter dadurch, daß das Steuerglied (65) dem Gehäuse (15) im Daumenbereich zugeordnet ist und einen mit dem Daumen zusammenwirkenden Druckknopfschalter (65) als Betätigungsmittel aufweist, das auf einen Druckknopfschalter (71) der Maus (70) einwirkt.

7. Das System gemäß Anspruch 1, das weiter dadurch gekennzeichnet ist, daß das erste Gehäuse (15) von nur einer Hand einer Bedienungsperson umgreifbar ist und unter diese eine Hand zu liegen kommen kann, um sie zu stützen; daß ein zweites, baulich eigenständiges Gehäuse (16) einen übergreifbaren, rükkenförmigen, im wesentlichen konvexen Zentralteil aufweist, der unter die zweite Hand der Bedienungsperson zu liegen kommt und dabei diese zweite Hand in ihrem Handballenbereich stützt, wenn diese Hand eine natürliche entspannte konkave Haltung einnimmt und dabei die Finger frei nach unten hängen, so daß die Fingerspitzen im wesentlichen vertikal nach unten zeigen, wobei das zweite Gehäuse (16) eine Mehrzahl von Dateneingabetasten (vergleichbar den Tasten 40 bis 64) in spiegelbildlicher Anordnung zu den Gruppen der Eingabetasten (wie 40-64) des ersten Gehäuses (15) aufweist, um von den Fingerspitzen der anderen Hand der Bedienungsperson aus einer konstant bleibenden Ausgangsposition heraus betätigt zu werden, wobei weiter dem zweiten Gehäuse (16) eine zweite Maus (70) innerhalb des zweiten Gehäuses (16) zugeordnet ist, die einen Bewegungsfühler (75) aufweist, der über die Unterseite des zweiten Gehäuses (16) vorsteht, um mit einer Bezugsfläche (80) zusammenzuwirken, wobei weiter ein zweites Steuerglied (65) dem zweiten Gehäuse (16) zugeordnet ist und mit einer Taste (71) der zweiten Maus zusammenwirkt, wobei weiter das zweite Gehäuse (16) mittels einer Hand der Bedienungsperson, ohne daß die Finger aus der konstant beizubehaltenden zweiten Ausgangsposition herausbewegt werden müßten, verschiebbar ist, um den Bewegungsfühler (75) der zweiten Maus (70) zu aktivieren, während das zweite Gehäuse (16) unabhängig vom ersten Gehäuse (15) auf der Bezugsfläche verschoben wird, während die Dateneingabetasten (40 bis 64 und weitere) zwischen erstem und zweitem Gehäuse (15 und 16) aufgeteilt sind, während schließlich das Mittel (18) zum Koppeln der Maus sowohl die erste als auch die zweite Maus (70) und die Dateneingabetasten sowohl von erstem als auch zweitem Gehäuse (15 und 16) mit dem Prozeßrechner (10) koppelt.

8. Das System gemäß Anspruch 7, weiter gekennzeichnet dadurch, daß die erste und die zweite Maus (70) eine verfeinerte Maussteuerung bewirken, indem die erste Maus (70) Signale für eine schnelle Mausbewegung und die zweite Maus (70) Signale für eine langsame Mausbewegung liefern.

9. Das System gemäß Anspruch 8, weiter gekennzeichnet dadurch, daß die Signale der ersten und der zweiten Maus (70) in ein einziges, zusammengesetztes Steuersignal (über 18) integriert werden.

10. Das System gemäß Anspruch 7, weiter gekennzeichnet dadurch, daß die von der ersten und der zweiten Maus (70) gelieferten Signale voneinander unbahängige Signale sind, so daß das jeweils von der ersten Maus (70) bewirkte Signal verschieden sein kann von dem von der zweiten Maus (70) bewirkte Signal.

11. Das System gemäß Anspruch 7, weiter gekennzeichnet dadurch, daß das dem zweiten Gehäuse (16) zugeordnete zweite Steuerglied (65) im Daumenbereich angeordnet ist und einen Druckknopfschalter (65) als Betätigungsglied zum Zusammenwirken mit dem Daumen und zum Einwirken auf einen Druckknopfschalter (71) der zweiten Maus (70) im zweiten Gehäuse (16) einschließt.

12. Das System gemäß Anspruch 7, gekennzeichnet weiter dadurch, daß die zweite Maus (70) in einer Kammer im Bereich der Unterseite des zweiten Gehäuses (16) zurückziehbar ist.

13. Das System gemäß Anspruch 7, gekennzeichnet weiter durch eine Vorrichtung (77) zum Unwirksammachen des Bewegungsfühlers (75), wenn ein Arbeiten der zweiten Maus (70) nicht gewollt ist.

14. Das System gemäß Anspruch 13, gekennzeichnet weiter dadurch, daß der Bewegungsfühler (75) eine mit einer Fläche zusammenwirkende Vorrichtung (75) einschließt und die Vorrichtung (77) zum Unwirksammachen des Bewegungsfühlers eine Feder (79) einschließt, um die erstgenannte Vorrichtung (75) am Zusammenwirken mit der Fläche so lange zu hindern, bis der nach unten auf das zweite Gehäuse (16) wirkende, von der Bedienungsperson ausgehende Handballendruck die Federkraft übersteigt.

## Revendications

1. Un système de commande d'entrée de données dans un ordinateur, comprenant un premier boîtier (15 ou 16) pourvu d'une surface supérieure (31) portant des touches (40 à 54) d'entrée de donnée prévues pour un actionnement par les doigts d'un opérateur, au moins un premier dispositif de souris (70) monté à l'intérieur du boîtier et incluant un détecteur (75) de déplacement s'étendant à partir de la surface inférieure, le boitier (15 ou 16) pouvant être déplacé à la main par l'opérateur afin d'actionner le détecteur (75) de déplacement du dispositif de souris (70) lorsque le boitier est déplacé sur une surface (80) de support, ledit système étant caractérisé en ce que:
le boîtier (15 ou 16) comprend une partie centrale sensiblement convexe surélevée qui peut être saisie, une partie centrale (31) apte à être sous-jacente à la paume d'au moins une des mains d'un opérateur et à supporter celle-ci dans une position concave détendue naturelle, les doigts pendant librement de façon que le bout du doigt de chaque doigt s'étende sensiblement à la verticale vers le bas; une série de touches (40 à 66) d'entrée de données agencée sur la surface supérieure du boîtier (15) près de la partie centrale surélevée (31) en groupes de configurations tridimensionnelles prédéterminées à chacune des positions du pouce (33) et des bouts des doigts (34 à 37) de la main d'un tel opérateur, chaque groupe étant actionnable par des bouts des doigts différents d'un opérateur à partir d'une position constante de repos, dans laquelle chaque doigt est susceptible d'activer la totalité des touches du groupe associé par un mouvement du doigt seul, les positions des doigts comprenant des puits individuels (34 à 37) de bouts des doigts, comportant chacun un côté inférieur et des côtés généralement verticaux portant des surfaces discrètes de touches (par exemple 40 à 54) pour recevoir librement les bouts des doigts d'un opérateur de manière à permettre un déplacement en sens multiples des bouts des doigts, afin de venir en contact avec les surfaces différentes discrètes parmi les surfaces de touches correspondant au sens de déplacement des bouts des doigts, et dans lequel les touches (par exemple 40 à 54) d'entrée des doigts sont positionnées dans diverses positions dans les puits (34 à 37) de façon que les touches d'entrée de donnée puissent être actionnées par les bouts des doigts dans la position constante de repos;
le dispositif de souris (70) ou chacun d'entre eux comprend un commutateur d'actionnement (71),
un premier élément de commande (65) du boîtier (15) se trouve à la position de pouce (33) et est couplé au commutateur d'actionnement (71) du dispositif de souris (70) afin d'actionner le commutateur (71) lorsque l'élément de commande (65) est actionné par le pouce de l'opérateur, et tout le premier boîtier (15) peut être déplacé à la main par l'opérateur, sans enlever les bouts des doigts de la position constante de repos, afin d'actionner le détecteur (75) de déplacement du dispositif de souris (70) lorsque le boitier (15) est déplacé sur une surface de support; et
un moyen (18) sert à coupler le dispositif de souris et les touches d'entrée de données à un dispositif de traitement (10).

2. Le système selon la revendication 1 caractérisé en outre par un dispositif (77) servant à invalider le détecteur (75) de déplacement lorsqu'un fonctionnement du dispositif de souris (70) n'est pas souhaité.

3. Le système selon la revendication 2, caractérisé en outre en ce que le détecteur de déplacement comprend un dispositif (75) venant en prise avec une surface et le dispositif d'invalidation (77) inclut un ressort (79) pour soulever le dispositif (75) venant en prise avec la surface de manière à le dégager d'une surface sous-jacente au boîtier (15) jusqu'à ce que la force du ressort (79) soit dépassée par une pression descendante exercée sur le boîtier (15) par la paume de la main de l'opérateur.

4. Le système selon la revendication 3, caractérisé en outre en ce que le boîtier (15) est sous-jacent à la paume d'une seule main d'un opérateur.

5. Le système selon la revendication 1 caractérisé en outre en ce que le dispositif de souris (70) est monté de façon amovible dans une cavité (76) de la surface inférieure du boîtier (15).

6. Le système selon la revendication 5, caractérisé en outre en ce que l'élément de commande (65) du boitier (15) est positionné à la position de pouce et comprend un actionneur (65) de commutateur à bouton poussoir avec lequel le pouce doit venir en prise; et le dispositif de souris (70) porte un commutateur (71) à bouton poussoir actionné par l'actionneur (65) de commutateur à bouton poussoir.

7. Le système selon la revendication 1 caractérisé en outre en ce que le premier boîtier (15) peut être saisi et est apte à être sous-jacent à la paume d'une seule main d'un opérateur et à supporter celle-ci; et caractérisé en outre par un deuxième boîtier (16) physiquement séparé comprenant une partie centrale sensiblement convexe surélevée qui peut être saisie, apte à être sous-jacente à la paume de l'autre main d'un opérateur et à la supporter dans une position concave détendue naturelle, les doigts pendant librement de façon que le bout du doigt de chaque doigt s'étende sensiblement verticalement vers le bas, le deuxième boitier (16) portant une série de touches d'entrée de données (comparables aux touches 40 à 64) agencées selon une image en miroir des groupes de touches (comme 40 à 64) du premier boîtier (15) pour être actionnées par les bouts des doigts de l'autre main d'un opérateur à partir d'une position constante de repos, le deuxième boîtier (16) incluant un deuxième dispositif de souris (70) monté à l'intérieur du deuxième boîtier (16) et comportant un détecteur (75) de déplacement s'étendant à partir de la surface inférieure du deuxième boitier (16) pour venir en contact avec une surface de support (80); un deuxième élément de commande (65) sur un deuxième boîtier (16) actionne un commutateur (71) du deuxième dispositif de souris, et le deuxième boîtier (16) est déplacé à une main par cet opérateur sans enlever les doigts de la position constante de repos afin d'actionner le détecteur (75) de mouvement du deuxième dispositif de souris (70) lorsque le deuxième boîtier (16) est déplacé sur une surface de support indépendamment du premier boîtier (15); et les touches (40 à 64 et autres) d'entrée de données sont divisées entre le premier et le deuxième boîtiers (15 et 16); et le moyen (18) de couplage du dispositif de souris couple au dispositif (10) de traitement tant le premier et que le deuxième dispositif de souris (70), et les touches d'entrée de données tant du premier que du deuxième éléments (15 et 16) de boîtiers.

8. Le système selon la revendication 7 caractérisé en outre en ce que le premier et le deuxième dispositifs de souris (70) fonctionnent de façon à réaliser une commande de souris à vernier, le premier dispositif de souris (70) produisant des signaux de déplacement rapide de souris et le deuxième dispositif de souris (70) produisant des signaux de déplacement plus lent de souris.

9. Le système selon la revendication 8 caractérisé en outre en ce que les signaux venant du premier et du deuxième dispositifs de souris (70) sont intégrés (par l'intermédiaire de 18) en un signal composite unique de commande de souris.

10. Le système selon la revendication 7 caractérisé en outre en ce que les signaux produits par le premier et le deuxième dispositifs de souris (70) sont des signaux indépendants l'un de l'autre, de sorte que le signal engendré par le premier dispositif de souris (70) peut être différencié du signal engendré par le deuxième dispositif de souris (70).

11. Le système selon la revendication 7 caractérisé en ce que le deuxième élément de commande (65) du deuxième boîtier (16) est positionné à la position de pouce et comprend un actionneur (65) de commutateur à bouton poussoir prévu pour que le pouce y vienne en prise; et le deuxième dispositif de souris (70) est monté à l'intérieur du deuxième boîtier (16) et comprend un commutateur (71) à bouton poussoir, actionné par l'actionneur (65) de commutateur de bouton poussoir.

12. Le système selon la revendication 7 caractérisé en outre en ce que le deuxième dispositif de souris (70) est monté de façon amovible dans une cavité de la surface inférieure du deuxième boîtier (16).

13. Le système selon la revendication 7 caractérisé en outre par le dispositif (77) servant à invalider le détecteur (75) de déplacement lorsque le fonctionnement du deuxième dispositif de souris (70) n'est pas souhaité.

14. Le système selon la revendication 13 caractérisé en outre en ce que le détecteur (75) de déplacement comprend un dispositif (75) venant en prise avec une surface et le dispositif d'invalidation (77) inclut un ressort (79) servant à soulever le dispositif (75) venant en prise avec une surface de manière à le dégager d'une surface sous-jacente au deuxième boitier

(16) jusqu'à ce que la force du ressort (79) soit dépassée par une pression descendante de la paume de la main de l'opérateur sur le deuxième boîtier (16).
